# EUROPEAN PATENT APPLICATION

(11) **EP 4 514 040 A1**
(43) Date of publication of application: **26.02.2025**
(21) Application number: 24194813.2
(22) Date of filing: 15.08.2024
(51) Int. Cl.: H04W 72/51, H04L 5/00, H04W 72/0453

(54) **ALLOCATION OF RADIO RESOURCE**

(30) Priority: 25.08.2023 IN 202341057015; 05.12.2023 US 202318529547
(71) Applicant: Cambium Networks Ltd, Ashburton, Devon TQ13 7UP (GB)
(72) Inventor: KING, Nigel, Ashburton, TQ13 7UP (GB); JAHAGIRDAR, Gopal, 560037 Bangalore (IN); SETHURAMAN, Venkat, 560037 Bangalore (IN)
(74) Representative: EIP

(57) **Abstract**

Radio resource is allocated to a subscriber module in a fixed wireless access cellular wireless system comprising an access point (1) and a plurality of subscriber modules (2a - 2m) at static locations, each subscriber module having a directional antenna aligned with the access point (1), and the area of coverage of the access point (1) having a plurality of sectors (4a, 4b, 4c). It is determined, at a first repetition rate, whether the subscriber module is suitable for frequency re-use on the basis of a first criterion. If it is, radio resource is allocated for communication to the subscriber module that is also allocated to adjacent sectors. Otherwise, a measure of quality of communication on a communication channel between the subscriber module and the access point is determined, more frequently than the first repletion rate, and radio resource is allocated for communication to the subscriber module, that is also allocated to an adjacent sector, dependent on the measure meeting a second criterion.

## Description

### Technical Field

The present invention relates generally to allocation of radio resource and particularly, but not exclusively, to dynamic scheduling of radio resource for fractional frequency re-use in a cellular fixed wireless access network.

### Background

Modern wireless communication networks are typically placed under great demands to provide high data capacity within the constraints of the allocated signal frequency spectrum. In cellular wireless mobile communication networks, such as, for example, networks operating according to the 3GPP LTE (Long Term Evolution) standard, capacity may be increased by re-using frequencies between cells, for example according to a predetermined frequency re-use pattern. For example, a network may operate with a re-use factor of 3, in which a given frequency is used by one in every three cells, which typically avoids the same frequency being used by adjacent cells, reducing potential interference between cells. However, only a third of the potential spectrum is used at each cell. In another example, a network may be configured to operate with a re-use factor of 1, in which the same frequencies are used by each cell. This has the potential advantage of more efficient use of the spectrum, but interference between signals from adjacent cells at cell boundaries leads to the use of robust modulation and error correction schemes for users at the cell boundaries, tending to reduce spectral efficiency. In a Fractional Frequency Re-use (FFR) scheme, a re-use factor of 1 may be used for some users, typically users experiencing a high signal to interference plus noise ratio (SINR), typically in an inner region of a cell. A higher re-use factor may be used for users experiencing a lower SINR, typically in an outer region of a cell. A user equipment in the cellular wireless mobile network may report the SINR experienced on its received signals to a base station, and the base station may allocate frequencies to the user equipment for use in the cell either according to a re-use factor of 1, or with a higher re-use factor, according to the SINR. The SINR may be reported, for example, in the form of a Channel Quality Indicator (CQI) in an LTE system.

A fixed wireless access wireless network is a type of cellular wireless system, typically comprising one or more an access points, each being typically mounted on an antenna tower, and a number of subscriber modules installed at fixed locations at customer premises, for example providing wireless Internet access to the premises. The subscriber modules typically have directional antennas, which are aligned on installation to point in the direction of the access point, to provide improved signal gain and to reject interference. The area of coverage of an access point may be divided into sectors, for example 3 sectors, each sector operating as a cell, and further access points may have further sectors operating as further cells. The fixed wireless access network may use equipment designed to operate according to a cellular wireless mobile communication standard, such as LTE. However, the requirements of a fixed and mobile cellular network are different in some respects, particularly regarding signalling and allocation of radio resource. It would be beneficial to improve the efficiency of a cellular wireless techniques when applied to a fixed wireless network.

### Summary

In accordance with a first aspect of the invention there is provided a method of allocating radio resource to a subscriber module in a fixed wireless access cellular wireless system comprising an access point and a plurality of subscriber modules at static locations, each subscriber module having a directional antenna aligned with the access point, and the area of coverage of the access point having a plurality of sectors, each sector being served by a respective radio transceiver of the access point.

The method comprises determining, at a first repetition rate, whether the subscriber module is suitable for frequency re-use or is a candidate for frequency partition on the basis of a first criterion, and dependent on a determination that the subscriber module is suitable for frequency re-use, allocating radio resource for communication to the subscriber module that is also allocated to adjacent sectors.

Dependent on a determination that the subscriber module is a candidate for frequency partition, the method comprises periodically, more frequently than the determination of whether the subscriber module is suitable for frequency re-use or is a candidate for frequency partition on the basis of a first criterion, determining a measure of quality of communication on a communication channel between the subscriber module and the access point, and dependent on the measure of quality meeting a second criterion, allocating radio resource for communication to the subscriber module, the radio resource being also allocated to an adjacent sector. Dependent on the measure of quality not meeting the second criterion, the method comprises not allowing allocation of radio resource for communication to the subscriber module that is allocated to an adjacent sector.

This allows a reduction in signalling overhead in a fixed wireless access network in comparison to a mobile network, by applying a two-stage decision process. At the first stage, it is decided relatively infrequently whether a subscriber module is suitable for frequency re-use or is a candidate for frequency partition according to a first criterion. The first criterion may be, for example, determined by a process comprising processing of measurements of signal strength of reference signals received at the subscriber module which are transmitted by a radio transceiver of a sector in which the subscriber module is camped and at least an adjacent sector. Alternatively or in addition, the first criterion may be determined by a process comprising processing pre-configured data providing classification of a location of the subscriber module, for example according to whether it suitable for frequency re-use or a candidate for frequency partition. This may be recorded on installation and/or determined from geographical data. If the subscriber module is found to be suitable for frequency re-use according to the first criterion, it has been found that in fixed wireless systems its signal to interference plus noise ratio (SINR) is likely to remain relatively constant, and so it can be scheduled for frequency re-use for an extended period without further testing. However, it has been found that if a subscriber module is a candidate for frequency partition according to the first criterion, its SINR may be expected to change in a shorter timescale, and so a test for a second criterion is applied in this case, more frequently than the test for the first criterion is applied. The test for the second criterion comprises determining a measure of quality of communication on a communication channel between the subscriber module and the access point, for example by a process comprising sending a Channel Quality Indicator (CQI) from the subscriber module to the access point. Because the second stage of the test is not applied to the subscriber modules found to be suitable for frequency re-use according to the first criterion, signalling overhead is reduced in comparison to that required in a mobile communication system.

In an example, the measurement signal strength comprises Reference Signal Received Power (RSRP) and the process of determining the first criterion comprises processing measurements of Reference Signal Received Quality (RSRQ) of reference signals received in the sector in which the subscriber module is camped.

This allows an efficient determination of whether the subscriber module meets the first criterion.

In an example, the measure of quality of communication on the communication channel between the subscriber module and the access point is determined on a basis comprising receiving a Channel Quality Indicator (CQI) at the access point.

In an example, the measure of quality of communication on the communication channel between the subscriber module and the access point is determined on a basis comprising block error rate information for data received at the subscriber module, wherein the block error rate information is based on HARQ feedback comprising ACK/NACK messages for downlink data received at the subscriber module.

In an example, the method comprises comparing an adjusted CQI value, which is received CQI value, adjusted on the basis of the block error rate information, to a pre-defined threshold, and dependent on the adjusted CQI value meeting the predefined threshold, allocating radio resource for communication to the subscriber module that is allocated to an adjacent sector.

In an example, the method comprises holding in a database the measure of the quality of communication on the communication channel between subscriber module and the access point for a plurality of subscriber modules camped in a plurality of sectors, and determining a schedule allocating radio resource as a function of time to the subscriber modules camped in more than one sector based on processing of the measures of the quality of communication.

This allows an efficient allocation of radio resource.

In an example, determining the schedule allocating radio resource as a function of time to the subscriber modules camped in more than one sector is based on comparing the measures of the quality of communication to a threshold. The threshold may be determined from a distribution of measures of the quality of the communication for subscriber modules camped in more than one sector.

This allows the threshold to be adapted according to the signal propagation and interference characteristics in the sectors.

In accordance with a second aspect of the invention, there is provided a scheduler for allocating radio resource to a plurality of subscriber modules in a fixed wireless access cellular wireless system comprising an access point and the plurality of subscriber modules at static locations, each subscriber module having a directional antenna aligned with the access point, and the area of coverage of the access point having a plurality of sectors, each sector being served by a respective radio transceiver of the access point, the scheduler comprising one or more processors configured cause the scheduler to: determine, at a first repetition rate, whether each subscriber module is suitable for frequency re-use or is a candidate for frequency partition on the basis of a first criterion; dependent on a determination that a subscriber module is suitable for frequency re-use, allocating radio resource for communication to the subscriber module that is also allocated to the adjacent sectors; and dependent on a determination that a subscriber module is a candidate for frequency partition: periodically, more frequently than the determination of whether the subscriber module is suitable for frequency re-use or is a candidate for frequency partition on the basis of a first criterion, determining a measure of quality of communication on a communication channel between the subscriber module and the access point; dependent on the measure of quality meeting a second criterion, allocating radio resource for communication to the subscriber module that is allocated to an adjacent sector; and dependent on the measure of quality not meeting the second criterion, not allowing allocation of radio resource for communication to the subscriber module that is allocated to an adjacent sector.

In accordance with a third aspect of the invention, there is provided a non-transitory computer-readable medium carrying instructions which, when executed by one or more processors, cause a scheduler comprising the one or more processors to perform the claimed method.

Further features of the invention will be apparent from the following description of preferred embodiments of the invention, which are given by way of example only.

### Brief Description of the Drawings

Figure 1 is a schematic diagram showing an access point and a plurality of subscriber modules, showing areas of coverage of the antenna beams for three sectors and identifying subscriber modules which are suitable for frequency re-use and subscriber modules which are suitable for frequency partition;
Figure 2 is a schematic diagram showing an example of a fractional frequency re-use pattern, in which frequency allocation f₁ is re-used between sectors for subscriber modules in the central section of each sector, and radio resource is partitioned into frequency allocations f₂ - f₄ for subscriber modules at the edges of the sectors;
Figure 3 is a schematic diagram illustrating the partitioning of frequency resource into allocations fi, fz, is f₄. Although shown as contiguous blocks of frequency for clarity, in practice each allocation may comprise smaller blocks of frequency interleaved with the other allocations;
Figure 4 is a schematic diagram showing an example of a fractional frequency re-use pattern, in which frequency partitioning is used for subscriber modules furthest from the access point to avoid interference form the areas of coverage of neighbouring access points;
Figure 5 is a schematic diagram showing a subscriber module and an access point comprising three radio heads connected to a baseband unit;
Figure 6 is a schematic diagram showing a scheduler connected to several access points;
Figure 7 is a flow diagram of a method according to an example;
Figure 8 is a flow diagram in an example in which the first criterion is based on geographical location; and
Figure 9 is a flow diagram in an example in which the first criterion is based on measurements of reference signals received from a sector in which the subscriber module is camped and from an adjacent sector.

### Detailed Description

By way of example, embodiments of the invention will now be described in the context of a fixed wireless access system operating using equipment operating according to 3GPP Long Term Evolution (LTE) standards. However, it will be understood that this is by way of example only and that other embodiments may involve other wireless systems and frequencies, and embodiments are not restricted to a specific frequency band of operation or a specific standard, and may involve operation in licensed or unlicensed bands. In the context of the fixed wireless access system described, the system comprises what are referred to as "access points" and "subscriber modules". However, embodiments are not limited to applications in which access points and subscriber modules are provided. However, embodiments are not limited to applications in which access points and subscriber modules are provided. For example, a peer-to-peer mesh network may be provided. In this case, there may be a plurality of wireless stations which are not differentiated into specific access points and subscriber modules. So, references to "access point" may be interpreted as references to a "first wireless stations", and references to a "subscriber module" or "subscriber modules" may be interpreted as references to a "further wireless station" or "further wires stations" respectively.

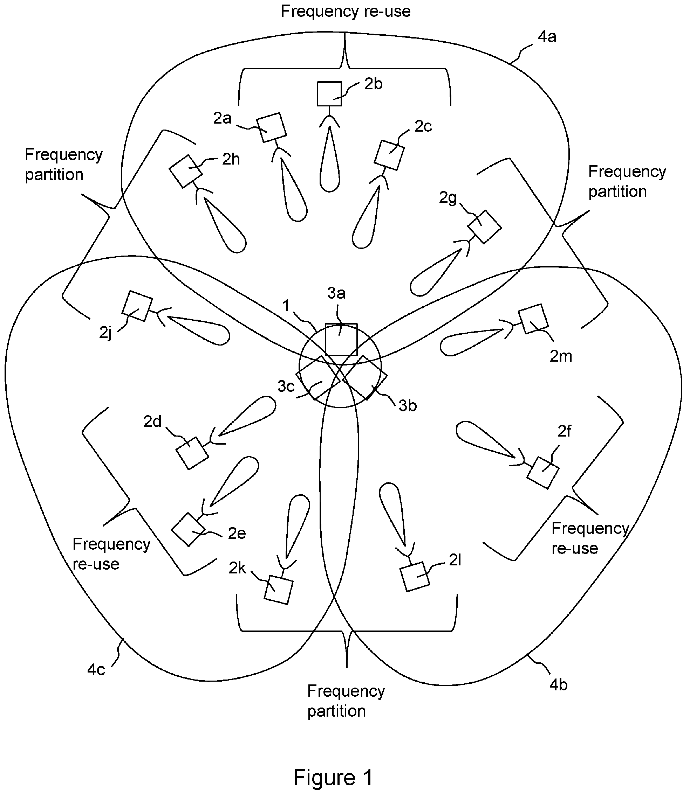

Figure 1 is a schematic diagram showing an example of a fixed wireless access network having an access point 1 in wireless communication with a plurality of subscriber modules 2a-2m. The access point is typically mounted on an antenna tower, and the subscriber modules are typically installed at subscriber premises, for example mounted on a building or on a pole attached to the building. The subscriber modules typically have a directional antenna producing a beam for transmission and reception directed at the access point. The access point in this example has radio transceivers 3a, 3b, 3c which are each attached to an antenna for providing a beam to a respective one of, in this example, three sectors. The area of coverage of each beam 4a, 4b, 4c is shown diagrammatically in Figure 1. It can be seen that there is some overlap between the area of coverage of one sector with the adjacent sector. If a subscriber module is located in the areas of overlap, then there may be interference between the signals transmitted in the two adjacent sectors, if the two sectors transmit at the same frequency. In a fractional frequency re-use arrangement, some of the subscriber modules, typically those closest to the centre of the sector, are provided with radio resource that has frequency re-use between the sectors, that is to say each sector may transmit at the same time on the same frequency. In the example of Figure 1, the subscriber modules 2a-2f are scheduled for frequency re-use. Other subscriber modules, typically those closest to the edge of the sector, are provided with radio resource that has frequency partitioning between the sectors, that is to say each sector transmits at a different frequency at a given time. This avoids interference, particularly in the region of coverage overlap between sectors, while allowing efficient spectral usage for the subscriber modules using frequency re-use. In Figure 1, the subscriber modules 2g - 2m are scheduled for frequency partitioning.

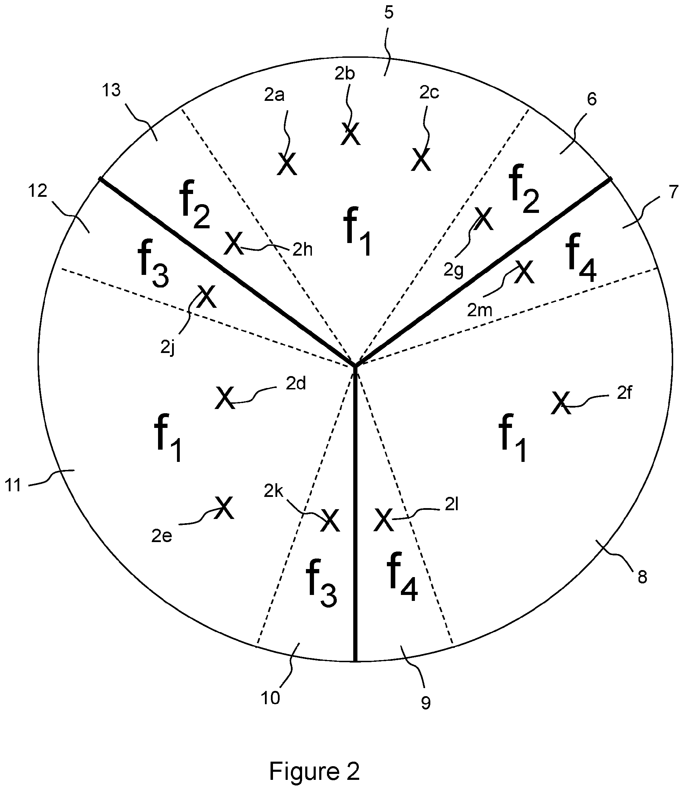

Figure 2 is a schematic diagram showing an example of a fractional frequency re-use pattern, in which frequency allocation f₁ is re-used between sectors for subscriber modules in the central section of each sector, and radio resource is partitioned into frequency allocations fz - f₄ for subscriber modules at the edges of the sectors. The position of the subscriber modules 2a-2m is shown, equivalent to the positions in Figure 1. The diagram is simplified for clarity to use regular geometric shaped for the boundaries between zones, but in reality, the shapes will be irregular due to radio wave propagation conditions and obstacles in the terrain. Although this example shows zones as geometrical areas, the physical location of a subscriber module is not necessarily used to decide upon which zone is appropriate for a subscriber module; this may be decided on the basis of relative levels of received signal and/or signal quality, and will be explained below. Zones 5, 8 and 11 are areas of coverage in which subscriber modules are scheduled to operate at frequencies in a frequency allocation fi, which is the same for each sector. Subscriber modules in zones 6 and 13 are scheduled to operate in a frequency allocation f₂,, subscriber modules in zones 10 and 12 are scheduled to operate in a frequency allocation fz,

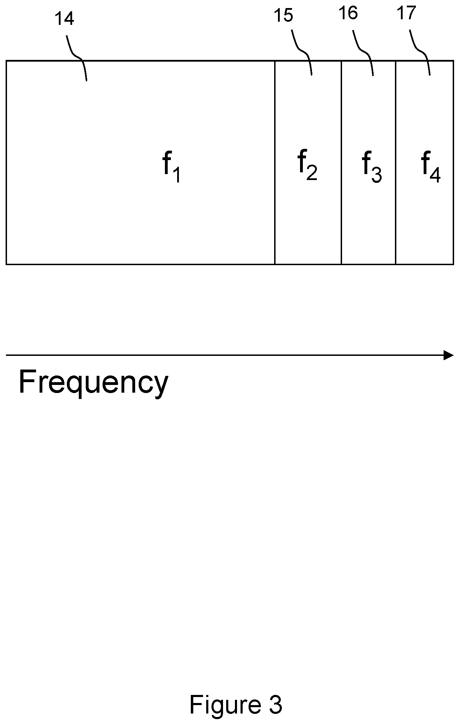

Figure 3 is a schematic diagram illustrating the partitioning of frequency resource into allocations 14, 15, 16, 17 for allocations f₁, f₂, is and f₄ respectively. Although shown as contiguous blocks of frequency for clarity, in practice each allocation may comprise smaller blocks of frequency interleaved with the other allocations. Typically, a greater allocation of frequencies may be allocated to the frequencies that are designated for re-use, in this example f₁. This typically provides spectral efficiency, while balancing the throughput available to the subscriber modules having different frequency allocations.

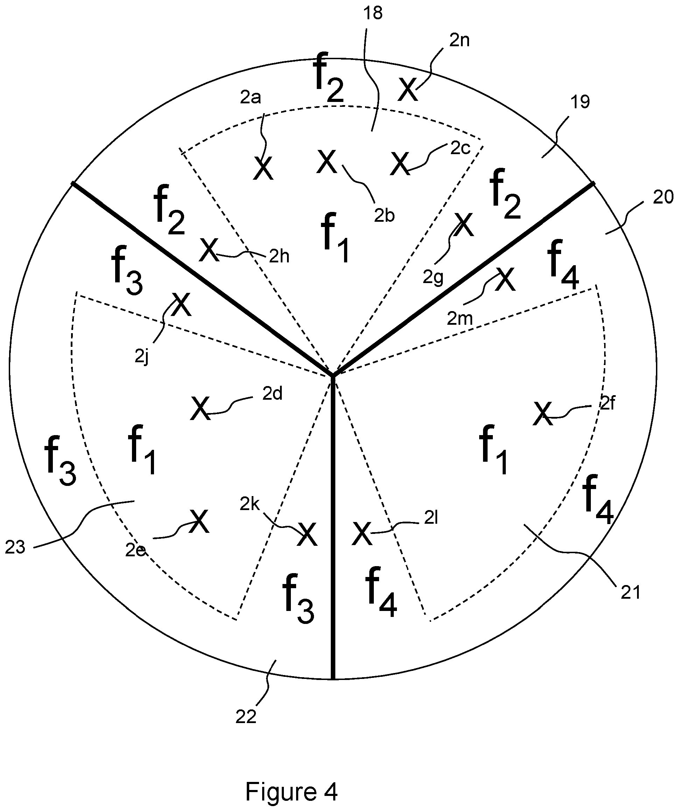

Figure 4 is a schematic diagram showing an example of a fractional frequency re-use pattern, in which frequency partitioning is used for subscriber modules furthest from the access point to avoid interference form the areas of coverage of neighbouring access points.

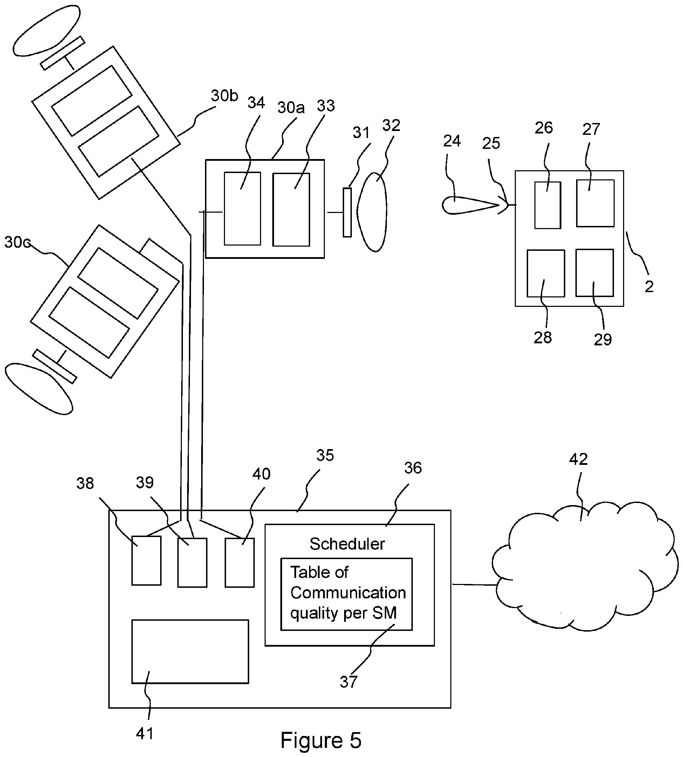

Figure 5 is a schematic diagram showing a subscriber module 2 and an access point comprising three radio heads 30a, 30b, 30c connected to a baseband unit 35. Typically, the radio heads are mounted on an antenna tower, and each is equipped with a sector antenna 31 producing a beam 32 illuminating a respective sector. The radio head may comprise a radio transceiver 33, which typically converts radio signals to and from baseband, and a digital unit 34, which typically sends and receives digitised baseband signals to the baseband unit 35. The baseband unit is typically installed at the base of the tower, and in this examples the baseband unit is connected to the radio heads for the three sectors served by the access point at the tower. As shown, the baseband unit may comprise a scheduler, which allocates radio resource as a function of time and frequency for communication between the access point and each subscriber module. The scheduler maintains a table giving communication quality for each subscriber module served by the access point. This will be discussed in more detail below. The baseband unit may be connected to the digital cloud 42 for connection of digital services to respective servers, and for connection to a network management function for the wireless network.

The baseband unit 35 typically has a digital baseband modulator/demodulator 38, 39, 40 connected to each radio head and a controller/processor 41.

Each subscriber module 2 typically has a directional antenna 25, configured to produce a beam for transmit and receive that is narrower than the beam produced by a sector antenna 31. The subscriber module typically comprises a radio transceiver 26, a digital baseband unit 27, a modulator/demodulator 28 and a control processor 29.

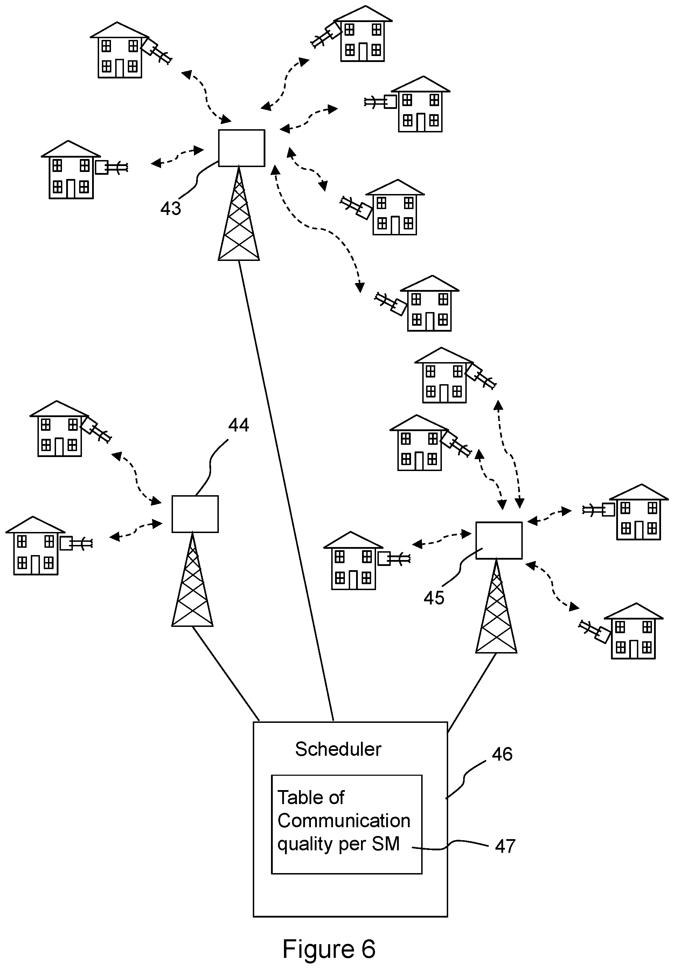

Figure 6 is a schematic diagram showing a scheduler 46 connected to several access points 43, 44, 45. In this example, the scheduler 46 holds a table giving communication quality for each subscriber module served by the sectors of several access points. This allows the scheduler to provide an efficient allocation of radio resource and appropriate modulation and coding schemes for transmission in the radio network.

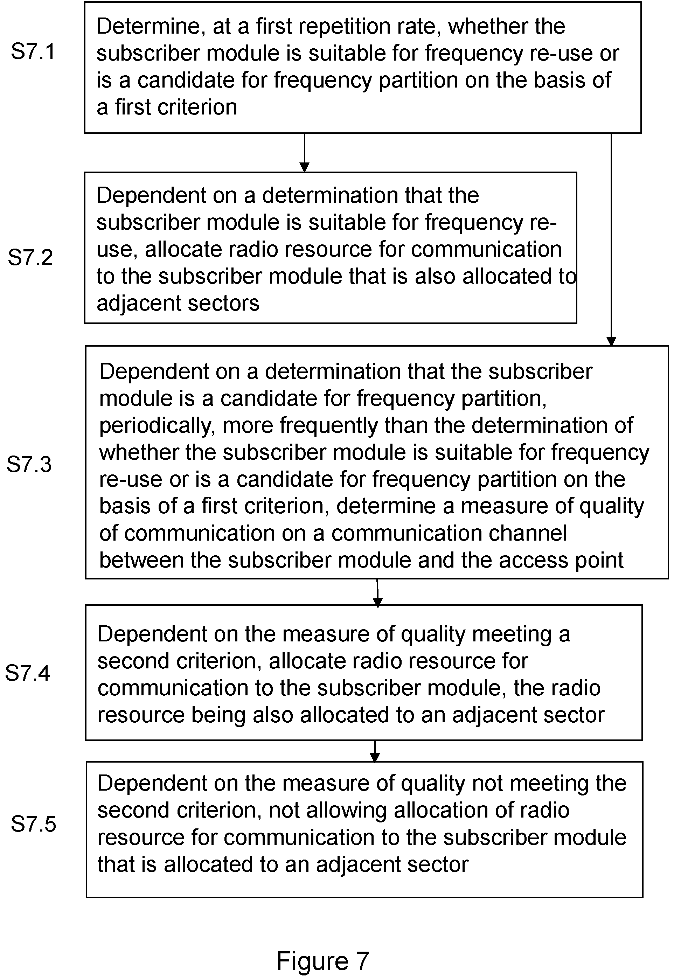

Figure 7 is a flow diagram of a method according to an example according to steps S7.1 to S7.5, providing a method of allocating radio resource to a subscriber module in a fixed wireless access cellular wireless system comprising an access point 1 and a plurality of subscriber modules 2a-3m at static locations, each subscriber module having a directional antenna 25 aligned with the access point 1, and the area of coverage of the access point having a plurality of sectors, each sector being served by a respective radio transceiver of the access point 3a, 3b, 3c.

At step S7.1, it is determined, at a first repetition rate, whether the subscriber module is suitable for frequency re-use or is a candidate for frequency partition on the basis of a first criterion, and at step S7.2, dependent on a determination that the subscriber module is suitable for frequency re-use, allocating radio resource for communication to the subscriber module that is also allocated to adjacent sectors.

At step S7.3, dependent on a determination that the subscriber module is a candidate for frequency partition, the method comprises periodically, more frequently than the determination of whether the subscriber module is suitable for frequency re-use or is a candidate for frequency partition on the basis of a first criterion, determining a measure of quality of communication on a communication channel between the subscriber module and the access point. At step S7.4, dependent on the measure of quality meeting a second criterion, radio resource is allocated for communication to the subscriber module that is allocated to an adjacent sector. At step S7.5, dependent on the measure of quality not meeting the second criterion, the method comprises not allowing allocation of radio resource for communication to the subscriber module that is allocated to an adjacent sector.

This allows a reduction in signalling overhead in a fixed wireless access network in comparison to a mobile network, by applying a two-stage decision process. At the first stage, it is decided relatively infrequently whether a subscriber module is suitable for frequency re-use or is a candidate for frequency partition according to a first criterion. The first criterion may be, for example, determined by a process comprising processing of measurements of signal strength of reference signals received at the subscriber module which are transmitted by a radio transceiver of a sector in which the subscriber module is camped and at least an adjacent sector. Alternatively or in addition, the first criterion may be determined by a process comprising processing pre-configured data providing classification of a location of the subscriber module, for example according to whether it suitable for frequency re-use or a candidate for frequency partition. This may be recorded on installation and/or determined from geographical data. If the subscriber module is found to be suitable for frequency re-use according to the first criterion, it has been found that in fixed wireless systems its signal to interference plus noise ratio (SINR) is likely to remain relatively constant, and so it can be scheduled for frequency re-use for an extended period without further testing. However, it has been found that if a subscriber module is a candidate for frequency partition according to the first criterion, its SINR may be expected to change in a shorter timescale, and so a test for a second criterion is applied in this case, more frequently than the test for the first criterion is applied. The test for the second criterion comprises determining a measure of quality of communication on a communication channel between the subscriber module and the access point, for example by a process comprising sending a Channel Quality Indicator (CQI) from the subscriber module to the access point. Because the second stage of the test is not applied to the subscriber modules found to be suitable for frequency re-use according to the first criterion, signalling overhead is reduced in comparison to that required in a mobile communication system.

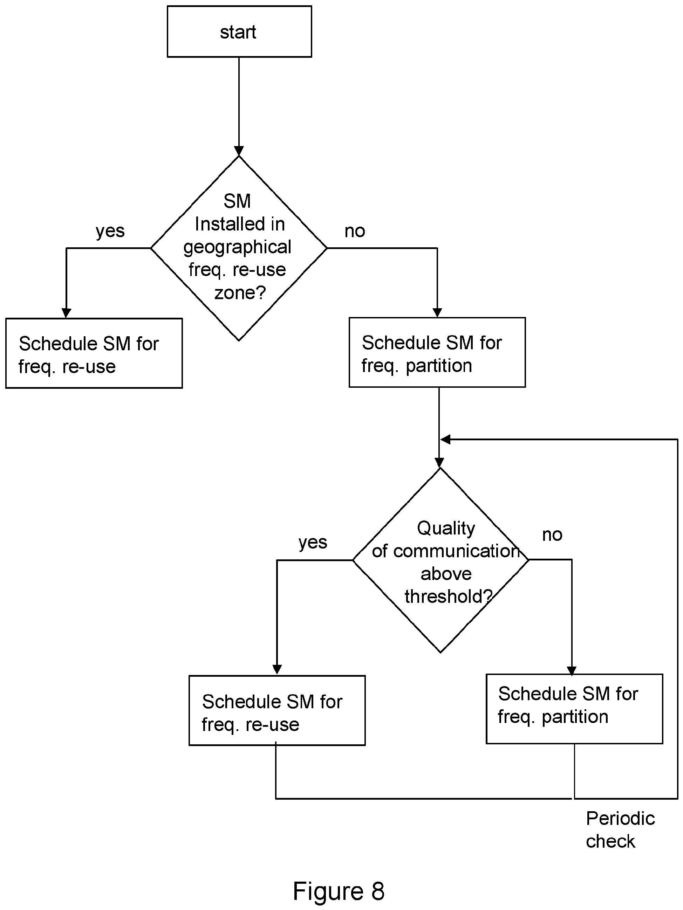

Figure 8 is a flow diagram in an example in which the first criterion is based on geographical location. The geographical location may me entered into a database on installation, and the location may be classified as suitable for frequency re-use of partitioning on the basis of measurements of reference signals from several sectors of the access point on installation, or by propagation simulation, or on the basis of geometrical orientation with the sector antenna.

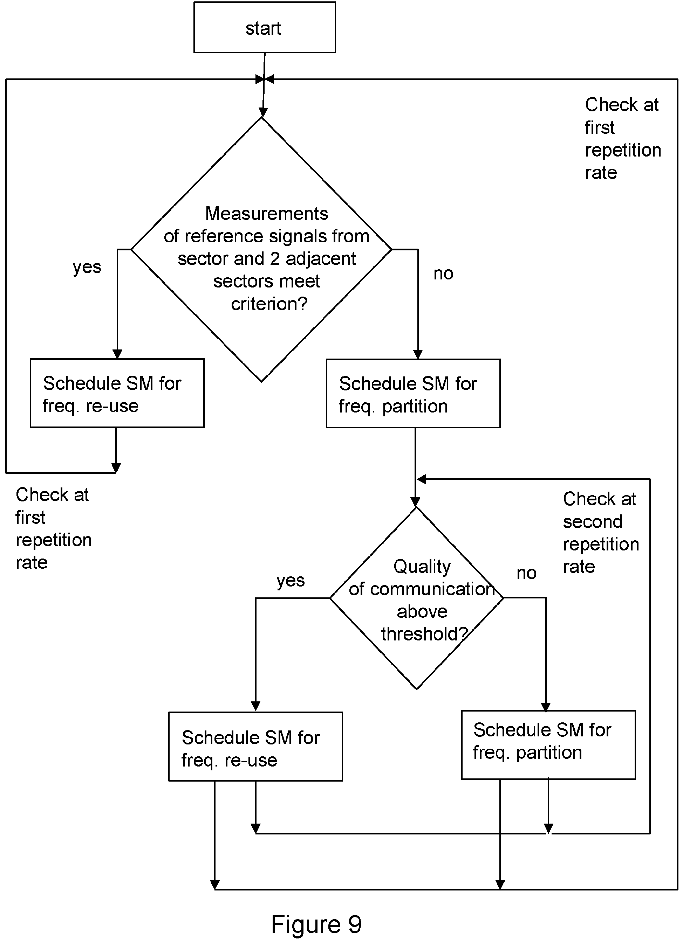

Figure 9 is a flow diagram in an example in which the first criterion is based on measurements of reference signals received from a sector in which the subscriber module is camped and from an adjacent sector. The measurement may comprise a measurement of Reference Signal Received Power (RSRP) and the process of determining the first criterion may also comprise processing measurements of Reference Signal Received Quality (RSRQ) of reference signals received in the sector in which the subscriber module is camped. If the received signal power for the sector in which the subscriber module is camped is close to that of another sector, within a given margin, then the subscriber module may be classified as a candidate for frequency partitioning. Also, if the Reference Signal Received Quality is below a threshold level, the subscriber module may be classified as a candidate for frequency partitioning.

In the examples of Figure 8 and Figure 9. the measure of quality of communication on the communication channel between the subscriber module and the access point is determined on a basis comprising receiving a Channel Quality Indicator (CQI) at the access point, and/or on a basis comprising block error rate information for data received at the subscriber module. For example, the block error rate information may be based on HARQ feedback comprising ACK/NACK messages for downlink data received at the subscriber module. The CQI values may be adjusted on the basis of the block error rate information and compared to a pre-defined threshold. It may be decided whether the subscriber module meets the second criterion on the basis of comparing the adjusted CQI value with a predefined threshold.

The measure of the quality of communication on the communication channel between subscriber module and the access point may be held in a database for the subscriber modules camped in several sectors, and a schedule allocating radio resource as a function of time to the subscriber modules camped in more than one sector may be determined based on processing of the measures of the quality of communication. The schedule may use the measures to allocate frequency resources in an overlapping or non-overlapping manner and also to allocate appropriate modulation and coding schemes to provide a fair allocation of resources and to improve spectral efficiency over the network as a whole.

Determining the schedule allocating radio resource as a function of time to the subscriber modules camped in more than one sector may be based on comparing the measures of the quality of communication to a threshold. The threshold may be determined from a distribution of measures of the quality of the communication for subscriber modules camped in more than one sector.

In an example, determination of the schedule may be dynamic on a subframe by subframe basis by the FFR scheduler, for example once per millisecond. The scheduled radio resources may be orthogonal frequency division multiple access resources in an LTE system.

In an example, the measurements of the quality of communication comprises Channel Sate Information, in which the downlink SINR and the CQI (Channel Quality Indicator) are metrices that define the state of downlink channel. The SINR is measured by the subscriber module on the downlink, and CQI is derived using the measured SINR. CQI (indices from 0 to 15) is reported to the access point/base station. A CQI value of 15 indicates best channel while lower values indicate degradation of SINR either due to interference and noise. These parameters are measured and updated periodically by subscriber modules when determining the second criterion, and in an example, CQI reports from all subscriber modules are available to the base station. On the uplink, the access point/base station performs measurements for SINR. Apart from the SINR and CQI metric, in an example the subscriber module also measures RSRP (Reference Signal Power) on the cell-specific Reference signals. In an example, the RSRP information is also reported to the base station by all subscriber modules. Distance-dependent path loss (PL) may be determined by the subscriber modules and access point/base station using RSRP. The difference in Reference Signal Transmit power (available and broadcast by base station) and RSRP determines Path Loss The distance -dependent path loss and SINR (and CQI) typically have linear relationship in the absence of any interference and may form a known baseline for the network. For instance SINR range -5dB to +25dB corresponds to path loss of 75dB to 135dB.

In a single frequency network, where there is presence of interference in the edge regions, the SINR metric (and thereby CQI) of SM's in edge region is expected to be degraded compared to the baseline case.

In an example, the scheduler is capable to validating the reported CQI from all SM's with real time average Block error rate (BLER) information, experienced by subscriber modules. The BLER information is available to the access point/base station using HARQ feedback (ACK/NACK's) for downlink data received by subscriber modules. A higher percentage of negative acknowledgements (NACK) indicates that the channel is degraded. Based on this real time BLER, the reported CQI from SM's is further adjusted (either upwards or downwards). The adjusted CQI forms the basis for selection of the modulation and coding scheme (MCS). For instance, a subscriber module experiencing higher interference could report lower CQI which is further validated by the BLER based CQI adjustment process. This would result in lower MCS, thereby degrading throughput. In such scenarios, the scheduler would then attempt to provide those subscriber modules with non-overlapping resource blocks so that CQI BLER improves, thereby boosting throughput.

The above embodiments are to be understood as illustrative examples of the invention. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A method of allocating radio resource to a subscriber module in a fixed wireless access cellular wireless system comprising an access point (1) and a plurality of subscriber modules (2a - 2m) at static locations, each subscriber module having a directional antenna aligned with the access point (1), and the area of coverage of the access point (1) having a plurality of sectors (4a, 4b, 4c), each sector being served by a respective radio transceiver of the access point, the method comprising:
determining, at a first repetition rate, whether the subscriber module is suitable for frequency re-use or is a candidate for frequency partition on the basis of a first criterion;
dependent on a determination that the subscriber module is suitable for frequency re-use, allocating radio resource for communication to the subscriber module that is also allocated to adjacent sectors; and
dependent on a determination that the subscriber module is a candidate for frequency partition:
periodically, more frequently than the determination of whether the subscriber module is suitable for frequency re-use or is a candidate for frequency partition on the basis of a first criterion, determining a measure of quality of communication on a communication channel between the subscriber module and the access point;
dependent on the measure of quality meeting a second criterion, allocating radio resource for communication to the subscriber module, the radio resource being also allocated to an adjacent sector; and
dependent on the measure of quality not meeting the second criterion, not allowing allocation of radio resource for communication to the subscriber module that is allocated to an adjacent sector.

2. A method according to claim 1, wherein the first criterion is determined by a process comprising processing of measurements of signal strength of reference signals received at the subscriber module which are transmitted by a radio transceiver of a sector in which the subscriber module is camped and at least an adjacent sector.

3. A method according to claim 1 or claim 2, wherein the first criterion is determined by process comprising processing pre-configured data providing classification of a location of the subscriber module.

4. A method according to claim 3, wherein the classification of the location of the subscriber module is according to whether it suitable for frequency re-use or a candidate for frequency partition.

5. A method according to claim 2, wherein the measurement signal strength comprises Reference Signal Received Power (RSRP) and wherein the process of determining the first criterion comprises processing measurements of Reference Signal Received Quality (RSRQ) of reference signals received in the sector in which the subscriber module is camped.

6. A method according to claim 1 or claim 2, wherein the measure of quality of communication on the communication channel between the subscriber module and the access point is determined on a basis comprising receiving a Channel Quality Indicator (CQI) at the access point.

7. A method according to any preceding claim, wherein the measure of quality of communication on the communication channel between the subscriber module and the access point is determined on a basis comprising block error rate information for data received at the subscriber module, wherein the block error rate information is based on HARQ feedback comprising ACK/NACK messages for downlink data received at the subscriber module.

8. A method according to claim 5, comprising:
comparing an adjusted CQI value, which is received CQI value, adjusted on the basis of the block error rate information, to a pre-defined threshold; and
dependent on the adjusted CQI value meeting the predefined threshold, allocating radio resource for communication to the subscriber module that is allocated to an adjacent sector.

9. A method according to any preceding claim, comprising:
holding in a database the measure of the quality of communication on the communication channel between subscriber module and the access point for a plurality of subscriber modules camped in a plurality of sectors; and
determining a schedule allocating radio resource as a function of time to the subscriber modules camped in more than one sector based on processing of the measures of the quality of communication.

10. A method according to claim 9, wherein determining the schedule allocating radio resource as a function of time to the subscriber modules camped in more than one sector is based on comparing the measures of the quality of communication to a threshold.

11. A method according to claim 10, comprising determining the threshold from a distribution of measures of the quality of the communication for subscriber modules camped in more than one sector.

12. A scheduler (36, 46) for allocating radio resource to a plurality of subscriber modules in a fixed wireless access cellular wireless system comprising an access point (1) and the plurality of subscriber modules (2a - 2m) at static locations, each subscriber module having a directional antenna aligned with the access point (1), and the area of coverage of the access point (1) having a plurality of sectors (4a, 4b, 4c), each sector being served by a respective radio transceiver of the access point, the scheduler comprising one or more processors configured cause the scheduler to:
determine, at a first repetition rate, whether each subscriber module is suitable for frequency re-use or is a candidate for frequency partition on the basis of a first criterion;
dependent on a determination that a subscriber module is suitable for frequency re-use, allocating radio resource for communication to the subscriber module that is also allocated to the adjacent sectors; and
dependent on a determination that a subscriber module is a candidate for frequency partition:
periodically, more frequently than the determination of whether the subscriber module is suitable for frequency re-use or is a candidate for frequency partition on the basis of a first criterion, determining a measure of quality of communication on a communication channel between the subscriber module and the access point;
dependent on the measure of quality meeting a second criterion, allocating radio resource for communication to the subscriber module, the radio resource being also allocated to an adjacent sector; and
dependent on the measure of quality not meeting the second criterion, not allowing allocation of radio resource for communication to the subscriber module that is allocated to an adjacent sector.

13. A non-transitory computer-readable medium carrying instructions which, when executed by one or more processors, cause a scheduler comprising the one or more processors to perform the method of any one of claims 1 to 11.
